# EUROPEAN PATENT APPLICATION

(11) **EP 2 723 040 A1**
(43) Date of publication of application: **23.04.2014**
(21) Application number: 12290349.5
(22) Date of filing: 16.10.2012
(51) Int. Cl.: H04L 29/08, H04L 29/14

(54) **Data management system**

(71) Applicant: Alcatel Lucent, 75007 Paris (FR)
(72) Inventor: Foerster, Christopher, 70184 Stuttgart (DE); Strauss, Thomas, 73734 Esslingen (DE)
(74) Representative: Zinsinger, Norbert

(57) **Abstract**

The present invention concerns a method for automatic integration of content from third-party providers in client-server arrangements comprising at least one client and at least one server. The method comprises downloading by a server data from one or more data sources (3) external to both of the client and the server, filtering the data downloaded from the one or more external data sources (3) and providing a first (1) and a second set (2) of data for a client application (4), the first set of data (1) comprising a copy of the initial data from the external data source (3) and the second set of data (2) comprising a clone of the external data source (3). The present invention concerns further a data management system (100) adapted to implement steps of the method for automatic integration of content from third-party providers in client-server arrangements.

## Description

### Field of the Invention

The present invention is situated in the field of managing data for a client application in a client-server architecture and relates more specifically to the integration of content of third-party providers, different from a client and from a server in the client-server architecture.

### Background of the Invention

In a client-server architecture, a typical client application, for example in so-called digital signage networks which could be briefly defined as networks adapted in particular to provide digitally processed content on digital screens, has the purpose to display the content which is provided by the server to the client. The content is often integrated from a third-party provider by the server and thereafter provided by the server to the client. If the client application can not or no longer be provided with content by the server, here the third-party content integrated by the server, in particular when an internet connection between the client and the server is not available, the client application may display empty or wrong content on the screen that. That, however, is undesirable or even not acceptable e.g. for advertising companies.

For large networks, in particular like digital signage networks, a conventional solution provides an interface to add RSS content to digital signage systems or other data sources. RSS which is short for RDF Site Summary (RDF = Resource Description Framework) and often dubbed Really Simple Syndication is a family of web feed formats used to publish frequently updated works - such as blog entries, news headlines, audio, and video - in a standardized format. However, the screen on which RSS content is displayed does not show any data at start-up or shows wrong data, if the interface, via which it normally obtains content, is not available. The update of content via the interface is only available via the client and if the client has no internet connection, no data can be displayed. Another conventional solution provides an interface for obtaining external data, but no automatic pull mechanism for providing content from the server to the client in case of missing updates of third-party content from the server to the client.

### Summary of the Invention:

The objective of the present invention is to improve the management of third-party content for a client-application.

The objective of the present invention is achieved by a method for automatic integration of content, in particular from third-party providers in client-server arrangements comprising at least one client and at least one server, the method comprising downloading data from one or more data sources, in particular external to both the client and the server, filtering by the server the data downloaded from the one or more external data sources, providing a first and a second set of data for a client application, the first set of data comprising a copy of the initial data from the external data source and the second set of data comprising a clone of the external data source. The objective of the present invention is further achieved by a data management system and a computer program product. The data management system is adapted to provide the steps of downloading data from one or more external data sources, filtering the data downloaded from the one or more external data sources, providing a first and a second set of data for a client application, the first set of data comprising a copy of the initial data from the external data source and the second set of data comprising a clone of the external data source. The computer program product is adapted to cause a data processing device to perform the steps of downloading data from one or more external data sources, filtering the data downloaded from the one or more external data sources and providing a first and a second set of data for a client application, the first set of data comprising a copy of the initial data from the external data source and the second set of data comprising a clone of the external data source, when executed on a computer.

Further advantages of the present invention are achieved by the embodiments indicated in the dependent claims.

In a preferred embodiment, the method comprises using the first set of data by the client application, if an incremental update of the client application by the second set of data is not possible. An incremental update can be understood as the update of the newest information available, as in particular the real-time information comprising the current data.

In a preferred embodiment, the method comprises using the first set of data by the client application, if an incremental update of the client application by the second set of data is not possible via the Internet.

In a preferred embodiment, providing the first set of data for the client application comprises providing a copy of the initial data from the external data source after the filtering of the downloaded data has been provided.

In a preferred embodiment, providing the second set of data comprises using real-time data downloaded from the external data source for the incremental updates of the client application. In a preferred embodiment, the method comprises requesting by the client application incremental updates of the client application by the second set of data. In a preferred embodiment, at least one of the one or more external data sources provides data such as RSS (= Really Simply Syndication), HTML(= Hyper Text Markup Language)-Websites, databases etc.

In a preferred embodiment, providing the second set of data for the client application comprises providing a clone of the external data source comprising a real-time copy of the data that has been downloaded from the external data source after the filtering of the downloaded data has been provided. A clone or clone copy according to this invention is to be understood as a copy of all data of the external data source, so that - while the first set of data comprises only a set of initial data taken at a particular moment - the second set of data is based on all data of the external data source including and in particular the current data. Therefore, a clone copy is a second version of the external data source, in which however some kind of data contents such as advertisement or pop-up windows or links in case they are un-desired is filtered out. While the first set of data presents the initial data for start up or fall-back, the second set of data is a rather full (re-)presentation of the external data source including primarily all contents including the current and real-time contents, which are provided by the external data source. However, based on these full content data, the filtering step is provided to exclude the kind of content or the content which is expressively undesired, such as the pop-up windows etc.; alternatively, the filtering might select a particular kind of content such as current information about time-tables or news etc. Hence, after the filtering, the second set of data is provided which is termed herein a clone or clone copy of the external data source.

In a preferred embodiment, the filtered data is in the same format as the unfiltered data before they were downloaded from the external data source. In a preferred embodiment, the external data source is monitored, in particular by a network operator, wherein changes in the source and connectivity problems to the source are tracked. In a preferred embodiment, the data provided by the clone of the external data source are controlled, modified and adjusted by a network operator, wherein false content of the data provided by the clone can be changed instantly, instead of changing the data within the external data source, for example via e-mail notification.

In an exemplary embodiment, the first set of data might be a time-table or a basic time-table and the second set of data is real-time data updating the time-table, and the real-time data of the second set of data might include a complete set of information for in this example travellers which is currently available (such as hotel or excursion/trip information), as well as real-time data about the time-tables, such as delays or travel transit information, but equally news, in particular selected for travellers (such as weather or political situation in the travelled country). This scenario might be a client application in a bus or a plane, where information for travellers is displayed on the screens.

In a preferred embodiment, the method comprises updating the initial data in determined time intervals. In an exemplary embodiment, the first and the second set of data comprise news. The first set of data might comprise e.g. the first ten news items and the second set of data offers more recent news items. In this example, the second set of data presents therefore in principle, i.e. optionally parsed and/or filtered, all current news available, while the first set of data comprise only a set of news items, in this example a set of ten news items. Actually, in a preferred embodiment, the first set of data might be updated to comprise for example another ten news items which might replace the first ten news items. In this way, even if the first set of data is used as fall-back information, the information of the first set of data is prevented from becoming too old or obsolete. Though the first set of data might not present real-time data, the data of the first set of data by the up-date are kept more or less current, for example not older than a predetermined time, for example one hour, or another time space, or comprise for example the news of the current day, which are updated therefore every day.

In a preferred embodiment, the method comprises using the second set of data for incremental updates of the client application. While the first set of data is used as fall-back, the second set of data is used to provide the client application basically, i.e. with a rather short or no time delay, with the real-time information, which is actually current. Therefore, the client application obtains incremental updates from the second set of data. The updates of the client application from the second set of data might be provided with merely no delay, this means as soon as the second set of data is provided by the data of the external data source. In other words, the data are downloaded from the external data source and the filtering is provided and the client application obtains the incremental updates from the second set of data. In this case the client application presents quasi real-time information.

The incremental updates might, however, be provided in other time intervals, for example, every five minutes or another time space, which might be in particular embodiments even some longer time space, for example one hour, in particular, if the information provided is not prone to change continuously. In either case, by the incremental updates the client application is provided with the current, i.e. valid, up to date, information. In a preferred embodiment, a network operator might control, modify and adjust the second set of data. In a specific embodiment, if the second set of data provides data for a RSS feed and contains false content, the data can be changed instantly instead of trying to change the external data source via mail notifications. In a specific embodiment, in particular the network operator might control the data of the client application to check, if the data is still current, and triggers the client application to be updated by the second set of data. In another preferred embodiment, the client application might request incremental updates from the second set of data or the incremental updates might be provided in determined time intervals. In another preferred embodiments, the incremental updates might be triggered by the server. In another preferred embodiments, the incremental updates might be provided in predetermined time intervals, in particular automatically. This applies both for the incremental updates by the optimized content source and of the initial data, which might be updated to provide updated fall-back information, as it will be described in detail below.

In a preferred embodiment, the method comprises providing by a source provider via an Internet connection between the source provider and the client application the incremental updates of the client application.

In a preferred embodiment, the method comprises executing the client application on one or more nodes of a digital signage network. A digital signage network could be described as a network adapted in particular to provide digitally processed content on digital screens, as for example LCD- (=Liquid Crystal Display), Plasma- or TFT- (=Thin Film Transistor) screens, to which one can look like on a digital plate or sign (therefore "signage"), often used in supermarkets or stations to provide information to the customers, and wherein the content, if downloaded from an external data source, can be adapted to the needs of this information system.

In a preferred embodiment, filtering of the data downloaded from the external data source comprises removing ill-formed data of un-wanted or unnecessary content or in-appropriate format. By this, at the end only a well-formed information block remains; it might be in a RSS-format (RSS= Really Simple Syndication). The result can be in the same format as the source but without unnecessary data. Also a monitoring of the optimized content source can be included to track changes in the source and connectivity problems to the source. By the optimized content source a well-formed source exists that can guarantee availability.

### Brief description of the figure

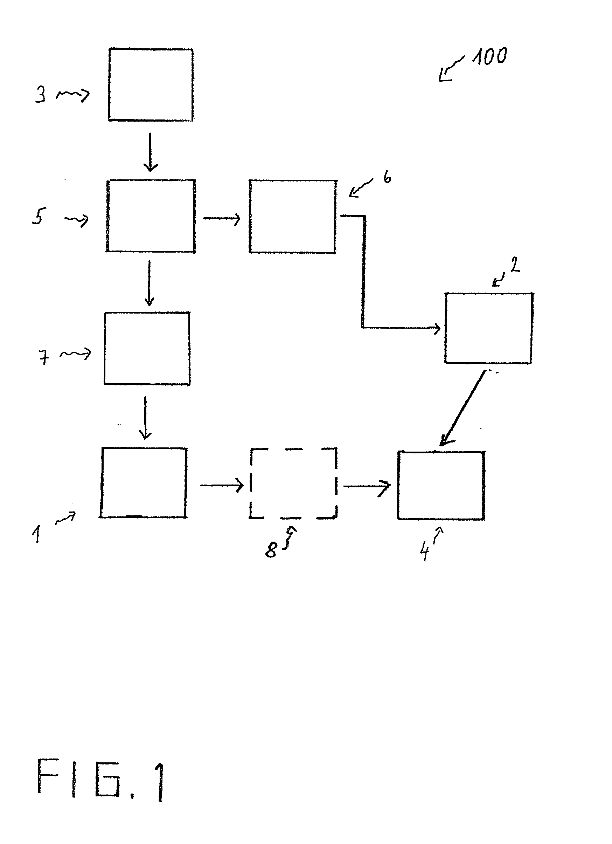

The present invention will be fully understood by the following detailed description, wherein
- Fig. 1: shows a diagram for explaining a method for automatic integration of content from third-party providers different from a client and from a server in an arrangement of a client-server architecture.

### Description of embodiments

In the following, for illustrative reasons, exemplary embodiments of a method according to the present invention are described which are implemented in a digital signage network with reference to fig. 1. Fig. 1 shows a client application 4, which comprises in particular a screen, on which information and similar content is displayed. The screen could be situated in a bus or a plane for information of customers or travellers, similarly in a station, in a school, a hospital or the like. Beside the client application 4, the other part of the described server-client architecture is the server side which consists in particular of a reader 5, a source provider 6 and an initial data provider 7. The reader 5, the source provider 6 and the initial data provider 7 could be implemented as three separate devices or units connected together via any kind of communication line or could be implemented as one device or within one device which provides the reader 5, the source provider 6 and the initial data provider 7 as functions or components (e.g. interfaces) of the common device and might be implemented as hardware or software or as a combination thereof.

The reader 5 downloads data from one or more external data sources 3. An external data source is to be understood as a data source external to both the client and the server in the client-server application or in the client-server arrangement. These external data sources 3 might provide data such as RSS (RSS = Really Simple Syndication), HTML-Websites (HTML= Hyper Text Markup Language) or any kinds of databases. Before downloading the data, the reader 5 might parse the external data source 3, this means the reader searches the external data source 3 for a specific kind of information and provides thereby a kind of pre-selection. For example, the reader 5 might search the external data source 3 for information such as news in the internet, or a time-table for a specific day in a database of a station.

The parsing step is only optional and might, in particular, be omitted, because the data once downloaded by the reader 5 from the external data source 3 are filtered by the reader 5. In the filtering step, unwanted content in the data are deleted such as pop-up bottoms or any unnecessary or undesired links for example. This might occur, because the data displayed on public environment such as stations are not provided for interactive communication; this means, for the people looking onto the screen, it shall not be possible to use for example a mouse for moving a pointer on the screen to click e.g. on pop-up windows or links on the depicted sites. Therefore, the depicted sites, for example websites are deprived of these (interactive) fields such as pop-up windows or links or other fields for entering any data. In other scenarios, for instance RSS Feeds often include HTML Code like social community share buttons within the text that is not important for the information block. These ill-formed data will be filtered and removed. At the end only a well-formed information block remains that can be provided in RSS-format. The result can be in the same format as the source but without unnecessary data. Also a monitoring of the source can be included to track changes in the source and connectivity problems to the source.

Based on this filtered data, a first and a second set of data are provided. The first set of data 1 is the initial data for the client application 4 that is provided by the reader 5 to the initial data provider 7 and by the initial data provider 7 to the client application 4. The client application 4 starts the application, for example presentation of news or information, with the initial data and then, preferably, proceeds with the incremental updates provided by the second set of data 2.

Preferably, the first set of data 1 with the initial data comprises a link to the second set of data 2. By the link to the second set of data 2 comprising the clone of the external data source 3, the client or the client application 4 can connect to the second set of data 2 provided by the server, in particular the source provider 6. Preferably, the client which is to be connected to the server needs advantageously to know only the address of the first set of data 1 with the link to the second set of data 2 to get connected to the server, in particular to be provided with the second set of data 2 comprising a clone copy of data of the external data source 3. Preferably, the client might not be able to be connected to the second set of data 2 without the link to the second set of data 2, the link being comprised in the first set of data 1. Based on the link, which is comprised in the first set of data 1, to the second set of data 2, the client can get data of the second set of data 2 which comprises in particular a clone copy of the external data source 4. Therefore, even if the data of the external data source 3 might be changed, the client application 4, which is provided by the clone copy of the data of the external data source 3 by the second set of data 2, gets a stable and controlled content of the data, because the change of the data of the external data source 3 might not be provided to the data of the second set of data 2, in particular due to the filtering of the data, by the control provided by an optional network operator and/or the control provided by an optional content management system 8. This provides the additional advantage of more flexibility because even if the external data source 3 might be changed the client application 4 has not to become aware of this change because it is provided by this stable data content of the clone copy of the second set of data 2.

Preferably, the client starts the client application 4 based on the basic data comprised in the initial data of the first set of data 1 and gets incremental updates by the second set of data 2 to which the client application 4 gets connected only by the link to the second set of data 2, wherein the link is comprised in the first set of data 1.

Preferably, the clone copy of the external data source 3 comprised in the second set of data 2 is transparent to the client and the client application 4, wherein transparent in this context means that the client can use the data of the clone copy as if it was data of the external data source 3 with the additional advantage that the data of the second set of data 2 provide an available, stable and controlled content of the data of the external data source 3.

Beside the link to the second set of data 2, the initial data of the first set of data 1 comprise in particular basic information. The initial data could comprise a basic time-table or a first set of news items which is depicted on the screen. The client application 4 then is provided with updates of the data. The incremental updates are provided by the source provider 6 to the client application 4. The source provider 6 is or provides a clone of the source, i.e. of the external data source, with the data provided by the reader 5. Thereby, a well-formed source exist that can guarantee availability. This source can be used by any client application 4 for incremental updates. For digital signage it is important to know the content of the data that are processed - in particular depicted - in the client-application. This source can be controlled and modified and adjusted by a network operator. If for instance a RSS feed contains wrong content, the network operator can change the wrong content instantly instead of having to change or to try to change the external source 3 via mail notifications. The clone copy of the source that is provided by the source provider 6 to the client application 4 is what is herein more generically termed the second set of data that is used for incremental updates by the client application 4. In fig. 1, the second set of data 2 is depicted as a separate element. The second set of data 2 could be termed an optimized content source. However, it should be notified that the second set of data 2 is used for incremental updates by and for the client application 4. With other words, the client application 4 receives updates from the second set of data 2 by a pull or push mechanism. Either the client application 4 requests updates from the second set of data 2 in a pull mechanism or the updates are pushed to the client application 4, for example triggered by an optional network operator or an element on the server side, e.g. by the source provider 6.

It has to be noted that both the first set of data 1 comprising the initial data and the second set of data 2 used as optimized content source are provided based on the filtered data that are downloaded from the one or more external data sources 3. Consequently, the first and the second set of data are based on the same filtered data so that the filter criteria for the first and the second set of data are the same. Thereby, a consistency between the initial data, provided by the first set of data 1, and the data of the optimized content source, provided by the second set of data 2, is guaranteed, that becoming important in particular in case the initial data are used in the fall-back scenario which will be described in detail in the following, but of course because the initial data are used for start-up and are than updated or replaced by incremental updates provided by the optimized content source. In this context, for clarifying reasons, one has to distinguish the incremental updates provided by the optimized content source to the client application 4, which are meant to provide current real-time full content data to the client application 4 on the one hand, from the optional updates of the initial data on the other hand, which are intended to keep the initial data which could be used as fall-back data more or less current, though they might not be real-time data and provide only a quite restricted set of data, for example some pages of news items or an updated time table.

Besides the start-up, as already mentioned, the first set of data 1 comprising the initial data are used by the client application 4, if an incremental update of the client application 4 by the second set of data 2 providing the optimized content source is not possible, in particular if an incremental update of the client application 4 by the second set of data 2 is not possible via the Internet, because an Internet connection between the source provider 6 on the server side providing the second set of data 2 and the client application 4 is not available. It has to be noted that the arrow between the element 2, i.e. the second set of data 2 providing the optimized content source, and the client application 4 would be the internet connection, by which the client application 4 obtains the incremental updates from the second set of data used as optimized content source, while the element source provider 6 and optimized content source belong together and could alternatively be implemented as one element. The source provider 6 and the second set of data 2 used as optimized content source might be implemented by or within two physically discrete elements connected via any data carry connection line, as depicted in fig. 1. Alternatively, they could be implemented as or within one unit.

If the internet connection between the second set of data 2 used as optimized content source and the client application 4 is not available, and the client application 4 can not obtain any updates from the second set of data 2 used as optimized content source, the client application 4 can get back to the first set of data 1 comprising the initial data as fall-back data. For example, if the client application 4 is no longer provided - by the second set of data 2 - with real-time information such as the current news or the current time-table with the real-time scheduled and delay times of arrival and departure times for example, the client application 4 can still display the information which is provided by the first set of data 1 comprising the initial data which might be the news of the last one or two or more hours. For example, in the embodiment, wherein the first and the second set of data comprise a time-table and its updates, the first set of data 1 might comprise the basic time-table showing arrival and departure times such as scheduled or such as updated at a particular past moment, for example such as updated one or two hours ago or another time ago. The second set of data 2, however, used as optimized content source, provides the real-time current information including the latest updates about arrival and departure times. Though the update of the initial data provided by the first set of data 1 is already past information - with the seldom exception of the exactly moment right after the update - it is still useable information.

Similarly in the embodiment of news information provided by the first and the second set of data, the updated initial data by the first set of data 1 might still provide interesting information of the news of the past some hours, although the very current news are not shown, because the incremental current real-time updates by the second set of data 2 used as optimized content source are not possible due to an unavailable internet connection between the second set of data 2 and the client application 4. In this case the updated initial data provided by the first set of data 1 are used as fall-back information and are still interesting information. It might be comparable to a newspaper from the morning, read for example at twelve o'clock.

As the first and the second set of data are based on the same filtered data of the external data source 3, by way of the incremental updates from the optimized content source in combination with the fall-back possibility by the initial data, the client application 4 can display a well formed content in a stable and controlled state. The information of the first and second set of data is consistent. For example, the kind of information is filtered in the same category and the undesired information is deleted equally. In case of lacking updates from the second set of data 2, the kind of information provided by the first set of data 1 fits into the missing information as to the subject-matter of data provided and the manner as the information is presented, though the extent of the data presented is restricted and the information might not be real-time.

If in the foregoing the term "initial data" and data of the optimized content source is used, in a strict technical sense a "copy" of the respective data is referred to, equivalently. As the data is always processed as digital data, each processing step of downloading or transferring etc. is always implemented by copying the data by electronic processing. In other words, if e.g. herein reference is made to the initial data which is displayed by the client application, in a strict technical sense, an electronic copy of the initial data from the external data source is referred to. Equally, as the second set of data there is a copy or a clone copy of the external data source after the filtering of the downloaded data provided respectively.

In a preferred embodiment, as already mentioned, in particular to keep also the initial set of data consistent with the real-time data of the optimized content source, the initial data are updated in determined time intervals. In this case, the initial data are not the very first data of the client application 4 any more, but are renewed fall-back data, for example not the basic time table, but the updated time table, or not the very first news of the morning, in the case the client application 4 started in the morning, but the news from e.g. twelve o'clock, while the current news would be the news of four o'clock presented by the optimized content source provided by the second set of data 2. To underline the difference between the updated initial data provided by the first set of data 1 and the updates of the client application 4 by the optimized content source provided by the second set of data 2, it has to be noted that even the updated initial data with the exception of the moment just after the update, are not meant to be real-time current data, but are updated some time ago, for example one, two or some hours ago. For example an update is made at twelve o'clock a.m. to replace the eight o'clock a.m. data. The twelve o'clock data are then used as fall-back data, until for example four o'clock p.m., when the next update is provided for the initial data by the updated first set of data 1. In contrast thereto, the incremental updates of the client application 4 by the optimized content source provided by the second set of data 2 are meant to keep the client application 4 really current. This means that as soon as - by the reader 5 - the data are downloaded from the external data source 3 and after the filtering step is provided, the source provider 6 provides the data for the optimized content source by the second set of data 2 for incremental updates to the client application 4, so that the client application 4 by the incremental updates can also get the current data, delayed only by the processing steps of downloading and filtering the data, by the incremental updates from the optimized content source which is furthermore (as already described above) a full copy of the filtered external data source 3 comprising in principle the whole content of the external data source 3 or of one subject-matter or category of the external data source 3; for example this is the news or time table information, while the initial data 1 comprise only a rather restricted content of data, e.g. the news which have been presented or updated at a certain moment or a time table which has been given or updated at a certain moment, while the optimized content source provided by the second set of data 2 as a clone copy of for example internet web pages contains all the real-time data, possibly of a determined subject-matter, with changes in principle at every moment as it is real-time information.

By the incremental updates from the optimized content source provided by the second set of data 2, the client application 4 keeps updated. The incremental updates from the optimized content source to the client application 4 might be provided in determined time intervals. In preferred embodiments, the time intervals for the incremental updates from the optimized content source to the client application 4 are short time intervals, for example every five seconds, or every five minutes or another rather short time period. In a preferred embodiment, the incremental updates from the optimized content source to the client application 4 are provided at any time, so that the client application 4 is updated by the optimized content source at every moment, continuously. In a very preferable embodiment, the incremental updates from the optimized content source to the client application 4 are provided via an internet connection. In other embodiments, the incremental updates from the optimized content source or the source provider 6 respectively to the client application 4 can be provided via any other communication line, for example via any mobile communication, radio link or any other link.

In a preferred embodiment, the incremental updates of the client application 4 are provided by the optimized content source to the client application 4 on request of the client application 4, which might be termed as pull-mechanism. In another preferred embodiment, the incremental updates of the client application 4 are triggered by a network operator or by the source provider 6 or another element on the server side.

In case the client application 4 can not get incremental updates from the second set of data 2 comprising the optimized content source, the client application 4 can use the initial data from the initial data provider as fall-back data. This might in particular occur, when an internet connection - in particular between the source provider 6 providing the second set of data 2 for the optimized content source on the one hand, and the client application 4 on the other hand is not available, as this is the internet connection, via which the incremental updates for the client application are normally provided. Thus, the client application 4 can display the initial data on the screen, instead of displaying wrong or empty content on the screen due to lack of incremental updates from the optimized content source. As already mentioned above, the initial data comprise preferably a restricted content of data, for example a time-table with basic information, or in case of news, the latest e.g. ten news items updated some time ago without the current information. However, still the initial data provide useful information for those persons who look on the screen of the client application 4. As noted above, the initial data are based on the same filtered data downloaded from the external data source 3 as the optimized content source so that there is a consistency between the initial data and the optimized content source. By means of the optimized content source and the initial data both filtered from the downloaded data of the external data source 3, the client application 4 will display a well-formed content in a stable and controlled state independent if the client has no internet connection.

In a preferred embodiment, the first set of data 1 comprising the initial data, provided from the server side via the initial data provider 7, are provided to the client application 4 via a CMS, i.e. a Content Management System 8, which is in particular in preferred embodiments a DS CMS, i.e. a Digital Signage Content Management System 8. By the DS CMS 8, the data provided for the client application 4, can be processed and adapted to better satisfy the needs of the client application 4. Hence, this means the content management system 8 offers another possibility to remove, add or change the data provided for the client application 4 for e.g. display on the screens. The CMS 8 might be implemented between the initial data provider 7 and the client application 4 as depicted in fig. 1, between the source provider 6 providing the optimized content source and the client application 4 or at any appropriate place within the network 100, which is in particular a digital signage network.

The described method is in a preferred embodiment implemented by a computer program product, which could be processed on any kind of computer processing means on hardware, software or combination thereof.

## Claims

1. A method for automatic integration of content, in particular from third-party providers in client-server arrangements comprising at least one client and at least one server, the method comprising:
- downloading by a server data from one or more data sources (3), in particular external to both of the client and the server;
- filtering the data downloaded from the one or more external data sources (3); and
- providing a first (1) and a second set (2) of data for a client application (4), the first set of data (1) comprising a copy of the initial data from the external data source (3) and the second set of data (2) comprising a clone of the external data source (3).

2. The method according to claim 1, wherein the method comprises:
- using the first set of data (1) by the client application (4), if an incremental update of the client application (4) by the second set of data (2) is not possible.

3. The method according to claim 2, wherein the method comprises:
- using the first set of data (1) by the client application (4), if an incremental update of the client application (4) by the second set of data (2) is not possible via the Internet.

4. The method according to claim 1, wherein providing the first set of data (1) for the client application (4) comprises:
- providing a copy of the initial data from the external data source (3) after the filtering of the downloaded data has been provided.

5. The method according to claim 1, wherein providing the second set of data (2) for the client application (4) comprises:
- providing a clone of the external data source (3) comprising a real-time copy of the data that has been downloaded from the external data source (3) after the filtering of the downloaded data has been provided.

6. The method according to claim 1, the method comprising:
- updating the initial data in determined time intervals.

7. The method according to claim 1, the method comprising:
- using the second set of data (2) for incremental updates of the client application (4).

8. The method according to claim 7, the method comprising:
- providing by a source provider (6) via an Internet connection between the source provider (6) and the client application (4) the incremental updates of the client application (4).

9. The method according to claim 8, wherein providing the second set of data (2) comprises:
- using real-time data downloaded from the external data source (3) for the incremental updates of the client application (4).

10. The method of claim 1, the method comprising:
- requesting by the client application (4) incremental updates of the client application (4) by the second set of data (2).

11. The method according to claim 1, wherein at least one of the one or more external data sources (3) provides data such as RSS, HTML-Websites, databases etc.

12. The method according to claim 1, the method comprising:
- executing the client application (4) on one or more nodes of a digital signage network.

13. The method according to claim 1, wherein filtering of the data downloaded from the external data source (3) comprises:
- removing data of un-wanted or unnecessary content or in-appropriate format.

14. A data management system (100) adapted to provide the steps of:
- downloading data from one or more external data sources (3);
- filtering the data downloaded from the one or more external data sources (3); and
- providing a first (1) and a second (2) set of data for a client application (4), the first set (1) of data comprising a copy of the initial data from the external data source (3) and the second set (2) of data comprising a clone of the external data source (3).

15. A computer program product adapted to cause a data processing device to perform the steps of:
- downloading data from one or more external data sources (3);
- filtering the data downloaded from the one or more external data sources (3); and
- providing a first (1) and a second (2) set of data for a client application (4), the first set (1) of data comprising a copy of the initial data from the external data source (3) and the second set (2) of data comprising a clone of the external data source (3), when executed on a computer.
